# EUROPÄISCHE PATENTSCHRIFT

(11) **EP 2 741 934 B1**
(45) Veröffentlichungstag und Bekanntmachung des Hinweises auf die Patenterteilung: **01.01.2020**
(21) Anmeldenummer: 12772059.7
(22) Anmeldetag: 03.08.2012
(51) Int. Cl.: B60L 7/16, H02M 5/40, H02P 3/22

(54) **VERFAHREN UND SCHALTUNG FÜR DEN MEHRPHASIGEN BETRIEB EINES ELEKTROMOTORS**
METHOD AND CIRCUIT FOR THE MULTI-PHASE OPERATION OF AN ELECTRIC MOTOR
PROCÉDÉ ET CIRCUIT POUR LE FONCTIONNEMENT MULTIPHASÉ D'UN MOTEUR ÉLECTRIQUE

(30) Priorität: 09.08.2011 DE 102011109773
(43) Veröffentlichungstag der Anmeldung: 18.06.2014
(73) Patentinhaber: Hochschule Ostwestfalen-Lippe, 32657 Lemgo (DE)
(72) Erfinder: M. SC. AUSTERMANN, Johann, 32825 Blomberg (DE); BORCHERDING, Holger, 31840 Hessisch-Oldendorf (DE)
(74) Vertreter: Holland, Ralf
(86) Internationale Anmeldenummer: PCT/DE2012/000784
(87) Internationale Veröffentlichungsnummer: WO 2013/020544

(56) Entgegenhaltungen:
- EP-A2- 1 484 831
- EP-A2- 1 641 110

## Beschreibung

Die Erfindung betrifft ein Verfahren und eine Schaltung für den mehrphasigen Betrieb eines Elektromotors.

Asynchronmaschinen werden in der Regel an Frequenzumrichtern betrieben, siehe auch die Patentanmeldungen EP 1 641 110 A2 sowie EP 1 484 831 A2. Die Schaltung eines solchen Frequenzumrichters weist einen Gleichrichter auf, der einen Gleichspannungszwischenkreis speist. Ein Kondensator in diesem Gleichspannungszwischenkreis dient der Glättung und eine häufig vorgesehene Induktivität der Entstörung. Der Zwischenkreis speist weiter einen Wechselrichter, aufweisend gesteuerte Brücken, für die häufig Metalloxid-Halbleiter-Feldeffekttransistoren, MOSFET, zunehmen Insulated Gate Bipolartransistoren, IGBT, oder Schaltthyristoren, Integrated Gate Commutated Thyristor, IGCT, Verwendung finden.

In vorteilhafter Weise kann die Höhe der Ausgangsspannung und die Frequenz in weiten Grenzen geregelt werden, so dass Elektromotoren optimal gesteuert werden können.

Unabhängig davon, ob ein Zwei- oder Vierquadrantenbetrieb des Elektromotors vorgesehen ist, wird bei einem Abbremsen der Asynchronmaschine Energie in den Gleichspannungs-Zwischenkreis eingespeist.

Bei einfachen Antrieben ist ein sogenannter Brems-Chopper vorgesehen, mit dem die überschüssige Energie aus dem Gleichspannungszwischenkreis von einem Bremswiderstand in Wärme umgewandelt wird, die dann an die Umgebung abgegeben wird. Deshalb werden Bremswiderstände regelmäßig außerhalb des Frequenzumrichters angeordnet.

Abgesehen davon, dass eine solche Erwärmung der Umgebung wenig effektiv ist, bedingt das Vorhersehen von Bremswiderständen auch durchaus aufwändige bauliche Maßnahmen, da zum einen die Bremswiderstände sehr groß sein können, naturgemäß abhängig von deren Leistung, und zum anderen eine ausreichende Kühlung der Bremswiderstände sichergestellt werden muss. So war es früher häufig üblich, Bremswiderstände beispielsweise auf dem Dach von elektrischen Lokomotiven anzuordnen.

Vor diesem Hintergrund sind insbesondere in der Eisenbahntechnik frühzeitig aufwendige, rückspeisefähige Frequenzumrichter sowie Matrixumrichter entwickelt worden, die die generatorische Brems-Leistung der Antriebsmotoren zurück in das einphasige Bahnstromnetz speisen können.

Der bauliche Aufwand und die damit verbundenen Kosten, beispielsweise durch den Ersatz eines Diodengleichrichters durch einen Umrichter mit hochwertigen Leistungstransistoren und aufwändig dimensioniertem Netzfilter mögen sich bei großen Antriebsleistungen durchaus rechnen, jedoch finden derartige Lösungen bei vergleichsweise kleinen Antriebseinheiten kaum Verwendung, da das Verheizen der generatorischen Energie in einem Bremswiderstand gegenüber einer Energie rückspeisenden Lösung deutlich kostengünstiger ist.

Die Erfindung macht es sich von daher zur Aufgabe, ein Verfahren und eine Schaltung für einen mehrphasigen Betrieb eines Elektromotors zur Verfügung zu stellen, die mit nur geringen Investitionskosten eine Rückspeisung generatorischer Energie bei einem Abbremsen auch bei kleinen Antrieben wirtschaftlich ermöglichen.

Gelöst wird diese technische Problematik durch ein Verfahren gemäß des Anspruchs 1 und durch eine Schaltung gemäß des Anspruchs 6.

Bei dem Verfahren für den Betrieb eines an wenigstens drei Phasen eines Stromnetzes angeschlossenen Elektromotors in einem generatorischen Betrieb wird gemäß des Anspruchs 1 darauf abgestellt, dass eine in das Stromnetz zurückzuspeisende Energie aus einem Gleichspannungszwischenkreis eines Frequenzumrichters als getakter und gemittelter Stromblock von einem Synchronwechselrichter auf die Netzphase höchster Spannung geschaltet wird.

Das Verfahren bietet eine Vielzahl von Vorteilen.

So kann zunächst die übliche Schaltung eines Frequenzumrichters mit Diodengleichrichtung beibehalten werden und es wird in diesen Vorwärtszweig des motorischen Betriebes nicht eingegriffen. Beispielsweise an Stelle des Bremswiderstandes eines Brems-Choppers geschaltet und damit von dem Vorwärtszweig entkoppelt bedarf es bei dem Rückwärtszweig in einem generatorischen Betrieb nur der für eine Rückspeisung erforderlichen Leistungselektronik.

Werden insbesondere die Anschlussklemmen eines Frequenzumrichters für einen Bremswiderstand als Schnittstelle für diese Leistungselektronik genutzt, entstehen in dem Frequenzumrichter keinerlei zusätzliche Kosten, wodurch insbesondere auch bereits bestehende Antriebssysteme mit nur geringem Aufwand rückspeisefähig nachgerüstet werden können.

Der Schaltungsaufbau für insbesondere die Durchführung dieses Verfahrens ist vergleichsweise einfach und weist gemäß des Anspruchs 6 einen Gleichspannungswandler auf, der aus einem Gleichspannungszwischenkreis des Frequenzumrichters gespeist wird, einen Synchronwechselrichter, der dem Gleichspannungswandler nachgeschaltet ist und ein dem Synchronwechselrichter nachgeschaltetes Netzfilter auf.

Dabei kann insbesondere bei dem Neubau von Frequenzumrichtern daran gedacht sein, dass der Gleichspannungswandler unmittelbar an den Gleichspannungszwischenkreis angeschlossen ist. Ein herkömmlicher Brems-Chopper für den Anschluss eines Bremswiderstandes kann dann entfallen.

Insbesondere auch für das Nachrüsten vorhandener Frequenzumrichter ist ein Anschluss des Gleichspannungswandlers an den Gleichspannungszwischenkreis nach Art eines Bremswiderstandes von Vorteil. Hierbei kann dann an Stelle des Bremswiderstandes die Schaltung nach der Erfindung bspw. an einen Brems-Chopper geschaltet sein.

Der Gleichspannungswandler weist weiter, je nach Ausführung, wenigstens einen eine Induktivität schaltenden, elektronischen Schalter auf, wobei die Schaltfrequenz variabel oder konstant vorgebbar ist.

Während der Einschaltzeit des elektronischen Schalters des Gleichspannungswandlers fließt ein Laststrom durch die Induktivität, während eine gegebenenfalls vorzusehende Freilaufdiode sperrt. Mit dem Laden des magnetischen Speichers steigt der Laststrom gleichmäßig an, während die Spannung an der Induktivität näherungsweise konstant ist. In der darauffolgenden Ausschaltphase liegt die Ausgangsspannung an der Induktivität an und der Ausgangsstrom nimmt kontinuierlich ab. Dabei schwankt der Strom nur geringfügig um einen Mittelwert und wird, in einem eingeschwungenen Zustand und bei einem nicht-lückenden Betrieb, nie Null.

Infolge dieses Verhaltens des Gleichspannungswandlers wird dem Synchronwechselrichter die zurückzuspeisende Energie als Stromblock zur Verfügung gestellt, der durch wenigstens einen elektronischen Schalter getaktet und durch das Verhalten der Induktion gemittelt ist.

Vorzugsweise wird der wenigstens eine elektronische Schalter des Gleichspannungswandlers mit einer vorgebbaren, variablen und insbesondere konstanten Schaltfrequenz betrieben. Aufwendige Steuerschaltungen können bei letzterer Betriebsweise entfallen.

Ferner ist es möglich, dass das Pulspausenverhältnis des wenigstens einen Schalters derart eingestellt wird, dass der über eine Schaltperiode von der Induktivität gemittelte Strom einem Sollwert entspricht. Infolgedessen wird der Synchronwechselrichter optimal angesteuert.

Den dem Synchronwechselrichter von dem Gleichspannungswandler zur Verfügung gestellten Stromblöcken sind Störungen, insbesondere mit der Schaltfrequenz des Gleichspannungswandlers überlagert, die in an sich üblicher Weise vor Einspeisung in das Stromnetz ausgefiltert werden.

Von besonderem Vorteil bei dem erfindungsgemäßen Verfahren und bei der erfindungsgemäßen Schaltung ist neben ihrer Einfachheit die Möglichkeit, dass durch eine gesondert ausgebildete Schaltung ein üblicher Bremswiderstand ersetzt werden kann, die anstelle desselben an dessen Anschlussklemmen angeschlossen wird, womit sehr schnell ein rückspeisefähiges Antriebssystem zur Verfügung steht.

Als Gleichspannungswandler kann ein Tiefsetzsteller mit Freilaufdiode Verwendung finden. Getaktet von nur einem elektronischen Schalter ist eine solche Lösung aufgrund der wenigen Bauteile kostengünstig, weist jedoch den Nachteil auf, dass nur eine Abwärtswandlung möglich ist.

Als Alternative bieten sich Flusswandler an, betrieben in einer Halb- oder Vollbrückenschaltung, die jedoch aufgrund des notwendigen Hochfrequenztransformators eine vergleichsweise teure und darüber hinaus eine voluminöse Lösung darstellen. Nachteilig ist auch das Steuern des Schaltverhalten von zwei elektronischen Schaltern im Gegentakt bzw. von vier Schaltern paarweise synchron und die Paare im Gegentakt. Von Vorteil bei der Verwendung eines Flusswandlers ist aber dessen vielseitige Einsetzbarkeit bspw. auch bei höheren zu übertragenden Leistungen.

Solches wird anhand der Zeichnung näher erläutert, in der lediglich schematisch Ausführungsbeispiele von Schaltungen dargestellt sind. Die Zeichnung zeigt:
- Fig. 1:: Eine Schaltung nach der Erfindung, geschaltet als Ersatz für einen Bremswiderstand eines Frequenzumrichters und
- Fig. 2:: einen Anschluss einer erfindungsgemäßen Schaltung unmittelbar an den Gleichspannungszwischenkreis eines Frequenzumrichters.

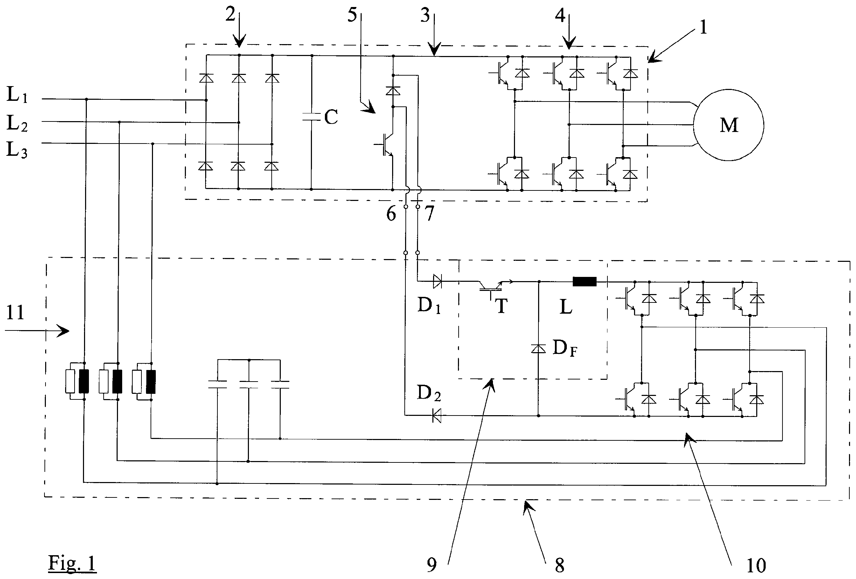

Fig. 1 zeigt eine über einen Frequenzumrichter 1 aus einem dreiphasigen Stromnetz L₁, L₂, L₃ gespeiste Asynchronmaschine M.

Der Frequenzumrichter 1 weist in üblicher Weise einen Diodengleichrichter 2 mit einem Glättungskondensator C, einen Gleichspannungszwischenkreis 3 und einen aus dem Gleichspannungszwischenkreis 3 gespeisten Wechselrichter 4 auf.

In dem Gleichspannungszwischenkreis 3 ist dem Grunde nach die Schaltung eines Brems-Choppers 5 dargestellt, dessen Bremswiderstand an den aus der Schaltung des Frequenzumrichters 1 herausgeführten Anschlüssen 6,7 anzuschließen wäre.

Erfindungsgemäß ist anstelle des Bremswiderstandes eine Schaltung 8 getreten, insbesondere auch als eigenständig, von dem Frequenzumrichter gesondert ausgebildete Baugruppe, durch die eine während eines generatorischen Betriebes der Asynchronmaschine M erzeugte Energie in das Stromnetz L₁, L₂, L₃ zurückgespeist wird.

Die Schaltung 8 weist eingangsseitig einen Gleichspannungswandler 9 auf, der einen Synchronwechselrichter 10 speist, hier beispielhaft durch einen Tiefsetzsteller ausgebildet, alternativ durch einen Flusswandler. Der Anschluss des Gleichspannungswandlers 9 und des Synchronwechselrichters 10 an die Anschlüsse 6,7 erfolgt hier über gegenläufig geschaltete Schutzdioden D₁, D₂.

Der Gleichspannungswandler 9, hier in Form eines Tiefsetzstellers mit einem elektronischen Schalter T, einer Induktivität L und einer Freilaufdiode D_{F}, stellt die in das Stromnetz L₁, L₂, L₃ zurückzuspeisende Energie aus dem Gleichspannungszwischenkreis 3 den Synchronwechselrichter 10 in der eingangs erläuterten Weise als getaktete und gemittelte Stromblöcke zur Verfügung.

Der elektronische Schalter T schaltet bspw. mit konstanter Schaltfrequenz und ist das Pulspausenverhältnis bevorzugt derart eingestellt, dass der über eine Schaltperiode der von der Induktivität L gemittelte Strom einem Sollwert entspricht.

Insbesondere die durch die Taktfrequenz des Schalters T hervorgerufenen Störungen, die die Stromblöcke überlagern, werden durch ein Netzfilter 11 ausgefiltert.

Das Netzfilter 11 weist in üblicher Weise für jede Phase eine Induktivität mit parallel geschalteter ohmscher Last und einen Kondensator auf.

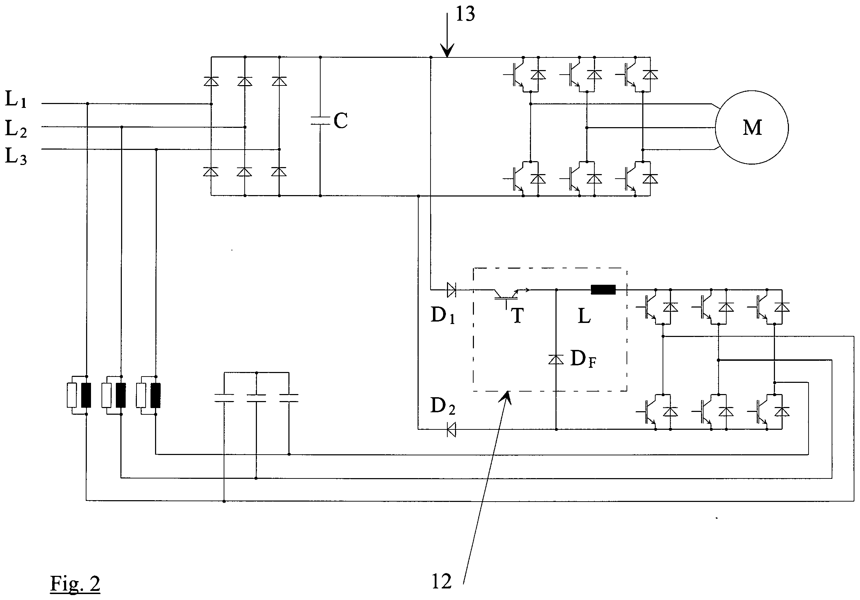

Die Schaltung gem. Fig. 2 unterscheidet sich von der in Fig. 1 wiedergegebenen im Wesentlichen durch den Anschluss des Gleichspannungswandlers 12 unmittelbar an den Gleichspannungszwischenkreis 13. Infolgedessen ist dort auf einen Brems-Chopper verzichtet. Insbesondere bei neuen Frequenzumrichtern kann dann die Schaltung nach der Erfindung als ein integraler Baustein eines Frequenzumrichters ausgebildet werden.

## Patentansprüche

1. Verfahren für den Betrieb eines an wenigstens drei Phasen eines Stromnetzes angeschlossenen Elektromotors in einem generatorischen Betrieb, **dadurch gekennzeichnet, dass** eine in das Stromnetz (L₁, L₂, L₃) zurückzuspeisende Energie aus einem Gleichspannungszwischenkreis (3) eines Frequenzumrichters (1) als getakteter und gemittelter Stromblock von einem Synchronwechselrichter (10) auf die Netzphase höchster Spannung geschaltet wird.

2. Verfahren nach Anspruch 1, **dadurch gekennzeichnet, dass** die zurückzuspeisende Energie von einem schaltbaren, eine Induktivität (L) aufweisenden Gleichspannungswandler (9) dem Synchronwechselrichter (10) als Stromblock zur Verfügung gestellt wird.

3. Verfahren nach Anspruch 2, **dadurch gekennzeichnet, dass** wenigstens ein elektronischer Schalter (T) des Gleichspannungswandlers (9) mit einer vorgebbaren Schaltfrequenz die Induktivität schaltet.

4. Verfahren nach Anspruch 3, **dadurch gekennzeichnet, dass** das Pulspausenverhältnis des wenigstens einen Schalters (T) derart eingestellt ist, dass der über eine Schaltperiode von der Induktivität (L) gemittelte Strom einem Sollwert entspricht.

5. Verfahren nach einem oder mehreren der vorangehenden Ansprüche, **dadurch gekennzeichnet, dass** den Stromblöcken überlagerte Störungen vor einer Einspeisung in das Stromnetz (L₁, L₂, L₃) ausgefiltert werden.

6. Schaltung für den Betrieb eines an wenigstens drei Phasen eines Stromnetzes über einen Frequenzumrichter angeschlossenen Elektromotors in einem generatorischen Betrieb nach einem oder mehreren der vorangehenden Ansprüche, **dadurch gekennzeichnet, dass** ein Gleichspannungswandler (9) aus einem Gleichspannungszwischenkreis (3) des Frequenzumrichters (1) gespeist wird, dass dem Gleichspannungswandler ein Synchronwechselrichter (10) und dass dem Synchronwechselrichter (10) ein Netzfilter (11) nachgeschaltet ist.

7. Schaltung nach Anspruch 6, **dadurch gekennzeichnet, dass** der Gleichspannungswandler unmittelbar an den Gleichspannungszwischenkreis angeschlossen ist.

8. Schaltung nach Anspruch 6, **dadurch gekennzeichnet, dass** der Gleichspannungswandler nach Art eines Bremswiderstandes an den Gleichspannungszwischenkreis angeschlossen ist.

9. Schaltung nach einem oder mehreren der Ansprüche 6 bis 8, **dadurch gekennzeichnet, dass** der Gleichspannungswandler (9) wenigstens einen eine Induktivität (L) schaltenden elektronischen Schalter (T) aufweist.

10. Schaltung nach einem oder mehreren der Ansprüche 6 bis 9 **dadurch gekennzeichnet, dass** der Gleichspannungswandler (9) ein Tiefsetzsteller ist.

11. Schaltung nach einem oder mehreren der Ansprüche 6 bis 9 **dadurch gekennzeichnet, dass** der Gleichspannungswandler ein Flusswandler ist.

12. Schaltung nach einem oder mehreren der Ansprüche 6 bis 11, **dadurch gekennzeichnet, dass** sie gesondert ausgebildet einen Bremswiderstand ersetzend an dessen Anschlüssen (6,7) angeschlossen ist.

## Claims

1. A method for operating an electric motor which is connected to at least three phases of an electricity grid in a regenerative operation, **characterized in that** energy to be fed back into the electricity grid (L₁, L₂, L₃) from a DC link (3) of a frequency converter (1) is switched from a synchronous inverter (10) to the line phase having the highest voltage as a clocked and averaged current block.

2. The method according to Claim 1, **characterized in that** the energy to be fed back from a switchable DC-DC converter (9) having an inductance (L) is made available to the synchronous inverter (10) as a current block.

3. The method according to Claim 2, **characterized in that** at least one electronic switch (T) of the DC voltage converter (9) switches the inductance at a specifiable switching frequency.

4. The method according to Claim 3, **characterized in that** the mark-to-space ratio of the at least one switch (T) is set in such a way that the current averaged over a switching period by the inductance (L) corresponds to a setpoint value.

5. The method according to one or more of the preceding claims, **characterized in that** perturbations superimposed on the current blocks are filtered out before being fed into the electricity grid (L₁, L₂, L₃).

6. A circuit for operating an electric motor connected to at least three phases of an electricity grid via a frequency converter in a regenerative mode according to one or more of the preceding claims, **characterized in that** a DC-DC converter (9) is fed from a DC link (3) of the frequency converter (1), that a synchronous inverter (10) is connected downstream of the DC-DC converter, and that a line filter (11) is connected downstream of the synchronous inverter (10).

7. The circuit according to Claim 6, **characterized in that** the DC-DC converter is connected directly to the DC link.

8. The circuit according to Claim 6, **characterized in that** the DC-DC converter is connected to the DC link in the manner of a braking resistor.

9. The circuit according to one or more of Claims 6 to 8, **characterized in that** the DC-DC converter (9) has at least one electronic switch (T) that switches an inductance (L).

10. The circuit according to one or more of Claims 6 to 9, **characterized in that** the DC-DC converter (9) is a buck converter.

11. The circuit according to one or more of Claims 6 to 9, **characterized in that** the DC-DC converter is a forward converter.

12. The circuit according to one or more of Claims 6 to 11, **characterized in that** in a separate design as a replacement for a braking resistor, it is connected to the terminals thereof (6, 7).

## Revendications

1. Procédé destiné à faire fonctionner un moteur électrique raccordé à au moins trois phases d'un réseau de courant dans un fonctionnement générateur, **caractérisé en ce qu'**une énergie à renvoyer dans le réseau de courant (L₁, L₂, L₃) venant d'un circuit intermédiaire à tension continue (3) d'un convertisseur de fréquence (1) est connectée par un onduleur synchrone (10) à la phase de réseau de tension maximale en tant que bloc électrique cadencé et moyenné.

2. Procédé selon la revendication 1, **caractérisé en ce que** l'énergie à renvoyer est mise à disposition de l'onduleur synchrone (10) en tant que bloc électrique par un convertisseur continu-continu (9) comportant une inductivité (L).

3. Procédé selon la revendication 2, **caractérisé en ce qu'**au moins un contacteur électronique (T) du convertisseur continu-continu (9) connecte l'inductivité avec une fréquence de connexion prédéfinissable.

4. Procédé selon la revendication 3, **caractérisé en ce que** l'intervalle d'impulsions d'au moins un contacteur (T) est réglé de telle manière que le courant moyenné sur une période de connexion de l'inductivité (L) correspond à une valeur théorique.

5. Procédé selon l'une quelconque ou plusieurs des revendications précédentes, **caractérisé en ce que** les anomalies superposées aux blocs électriques sont éliminées par filtration avant une alimentation dans le réseau de courant (L₁, L₂, L₃).

6. Circuit destiné à faire fonctionner un moteur électrique raccordé à au moins trois phases d'un réseau de courant par le biais d'un convertisseur de fréquence dans un fonctionnement générateur, selon l'une quelconque ou plusieurs des revendications précédentes, **caractérisé en ce qu'**un convertisseur continu-continu (9) est alimenté à partir d'un circuit intermédiaire de tension continue (3) du convertisseur de fréquence (1), **en ce qu'**un onduleur synchrone (10) est monté en aval du convertisseur continu-continu et **en ce qu'**un filtre de réseau (11) est monté en aval de l'onduleur synchrone (10).

7. Procédé selon la revendication 6, **caractérisé en ce que** le convertisseur continu-continu est raccordé directement au circuit intermédiaire de tension continue.

8. Circuit selon la revendication 6, **caractérisé en ce que** le convertisseur continu-continu est raccordé au circuit intermédiaire de tension continue sous la forme d'une résistance de freinage.

9. Circuit selon l'une quelconque ou plusieurs des revendications 6 à 8, **caractérisé en ce que** le convertisseur continu-continu (9) comporte au moins un contacteur électronique (T) connectant une inductivité (L) .

10. Circuit selon l'une quelconque ou plusieurs des revendications 6 à 9, **caractérisé en ce que** le convertisseur continu-continu (9) est un convertisseur-abaisseur.

11. Circuit selon l'une quelconque ou plusieurs des revendications 6 à 9, **caractérisé en ce que** le convertisseur continu-continu est un convertisseur de flux.

12. Circuit selon l'une quelconque ou plusieurs des revendications 6 à 11, **caractérisé en ce que** spécialement constitué remplaçant une résistance de freinage, il est raccordé aux connexions de celle-ci (6, 7).
